(19) **Europäisches Patentamt**

**European Patent Office**

**Office européen des brevets**

(11) **EP 0 847 350 B1**

(12) **EUROPÄISCHE PATENTSCHRIFT**

(45) Veröffentlichungstag und Bekanntmachung des Hinweises auf die Patenterteilung:
**02.04.2003   Patentblatt 2003/14**

(51) Int Cl.$^7$: **B60T 8/32**, B60T 13/66

(21) Anmeldenummer: **96930081.3**

(22) Anmeldetag: **22.08.1996**

(86) Internationale Anmeldenummer:
**PCT/EP96/03711**

(87) Internationale Veröffentlichungsnummer:
**WO 97/009212 (13.03.1997 Gazette 1997/12)**

(54) **ELEKTRONISCH REGELBARES BREMSBETÄTIGUNGSSYSTEM FÜR KRAFTFAHRZEUGE**

ELECTRONICALLY CONTROLLABLE BRAKE OPERATING SYSTEM FOR MOTOR VEHICLES

SYSTEME D'ACTIONNEMENT DE FREINS POUVANT ETRE REGULE ELECTRONIQUEMENT POUR VEHICULES A MOTEUR

(84) Benannte Vertragsstaaten:
**DE FR GB**

(30) Priorität: **08.09.1995   DE 19533174**

(43) Veröffentlichungstag der Anmeldung:
**17.06.1998   Patentblatt 1998/25**

(73) Patentinhaber: **Continental Teves AG & Co. oHG 60488 Frankfurt (DE)**

(72) Erfinder:
- **RÜFFER, Manfred
  D-65843 Sulzbach (DE)**
- **JUNGBECKER, Johann
  D-55576 Badenheim (DE)**

(56) Entgegenhaltungen:
| | |
|---|---|
| DE-A- 3 424 912 | DE-A- 3 502 018 |
| DE-A- 4 029 793 | DE-A- 4 322 182 |
| DE-A- 4 413 579 | US-A- 4 756 391 |
| US-A- 4 812 777 | US-A- 5 312 172 |

**Beschreibung**

Die Erfindung betrifft ein elektronisch regelbares Bremsbetätigungssystem für Kraftfahrzeuge mit einem mittels eines Betätigungspedals betätigbaren, mindestens einen Kolben aufweisenden Hauptbremszylinder, mit mindestens einem durch eine elektronische Steuereinheit ansteuerbaren Bremsdruckgeber, an den Radbremsen des Fahrzeuges direkt angeschlossen sind und der über mindestens eine mittels einer Ventileinrichtung absperrbare hydraulische Verbindung mit dem Hauptbremszylinder verbindbar ist, mit mindestens einer Sensoreinrichtung zur Erkennung des Fahrerverzögerungswunsches sowie mit einer mit dem Hauptbremszylinder zusammenwirkenden Simulatorkammer.

Ein derartiges Bremsbetätigungssystem ist z. B. aus der DE 43 22 182 A1 bekannt. Bei dem vorbekannten Bremsbetätigungssystem ist die Simulatorkammer im Hauptbremszylinder ausgebildet und steht mit einem dem Hauptbremszylinder zugeordneten Druckmittelvorratsbehälter in Verbindung. In dieser Verbindung ist ein elektrisch ansteuerbares, vorzugsweise stromlos geschlossenes (SG-) 2/2-Wegeventil eingefügt, so daß bei einem Ausfall der elektronischen Steuereinheit die Verbindung abgesperrt wird.

Als nachteilig ist bei dem vorbekannten Bremsbetätigungssystem anzusehen, daß zusätzliche Leitungen zwischen der Simulatorkammer und dem 2/2-Wegeventil sowie dem 2/2-Wegeventil und dem Druckmittelvorratsbehälter vorgesehen sein müssen, die mit erheblichem Aufwand bezüglich des erforderlichen Bauraums sowie der Herstellungskosten verbunden sind. Ein weiterer Nachteil wird in der Verwendung des erwähnten elektromagnetisch betätigbaren 2/2-Wegeventils gesehen, das bei jedem Bremsvorgang bestromt werden muß und demnach einen zusätzlichen Energiebedarf benötigt. Außerdem kann das Ventil im Betrieb undicht werden und stellt somit eine potentielle Störungsquelle dar.

Es ist daher Aufgabe der vorliegenden Erfindung, ein elektronisch regelbares Bremsbetätigungssystem der eingangs genannten Gattung dahingehend zu verbessern, daß bei Senkung der Herstellungskosten insbesondere seine Betriebssicherheit erhöht wird. Gleichzeitig soll die Schaltung eines solchen Systems erheblich vereinfacht werden.

Eine erste Lösung dieser Aufgabe besteht darin, daß die Simulatorkammer an einen im Hauptbremszylinder von einem weiteren Kolben begrenzten hydraulischen Raum mittels einer absperrbaren Verbindung hydraulisch angeschlossen ist. Eine vorteilhafte Weiterbildung des Erfindungsgegenstandes sieht dabei vor, daß die Simulatorkammer an einen im Hauptbremszylinder vom weiteren Kolben begrenzten Ringraum angeschlossen ist, der mit dem hydraulischen Raum absperrbar verbunden ist.

Eine zweite Lösung der der Erfindung zugrundeliegenden Aufgabe sieht vor, daß der weitere Kolben zweiteilig ausgebildet ist und aus einem Außenkolben sowie einem Innenkolben besteht, der im Außenkolben geführt und von diesem mitnehmbar angeordnet ist, wobei die absperrbare Verbindung durch mindestens eine im Außenkolben ausgebildete Bohrung gebildet ist, die mit einer am Innenkolben angeordneten Dichtmanschette so zusammenwirkt, daß das Absperren der Verbindung durch eine Relativbewegung des Außen- und des Innenkolbens zueinander erfolgt.

Weitere vorteilhafte Merkmale des Erfindungsgegenstandes sind in den Unteransprüchen 4 und 5 aufgeführt.

Die Erfindung wird in der nachfolgenden Beschreibung von zwei Ausführungsbeispielen unter Bezugnahme auf die beiliegende Zeichnung näher erläutert. In der Zeichnung zeigt:

Fig. 1    ein Schaltbild einer ersten Ausführung des erfindungsgemäßen Bremsbetätigungssystems,

Fig. 2    eine zweite Ausführung des im Rahmen des erfindungsgemäßen Bremsbetätigungssystems verwendbaren Hauptbremszylinders, teilweise im Schnitt, und

Fig. 3    einen Teilbereich des in Fig. 1 oder 2 gezeigten Hauptbremszylinders in einer einem Fehlerfall entsprechenden Betätigungsstellung.

Das in der Zeichnung dargestellte, elektronisch regelbare Bremsbetätigungssystem nach der Erfindung ist für ein Fahrzeug mit Vorderradantrieb vorgesehen. Es besteht aus einem mittels eines Betätigungspedals 1 betätigbaren, zweikreisigen Hauptbremszylinder bzw. Tandemhauptzylinder 2, der durch zwei Kolben 18,20 begrenzte, voneinander getrennte Druckräume 17,19 aufweist, die mit einem drucklosen Druckmittelvorratsbehälter 3 in Verbindung stehen. Der erste Druckraum (Primärdruckraum) 17 steht mittels einer absperrbaren ersten hydraulischen Leitung 11 einerseits mit einem ersten elektrisch ansteuerbaren Bremsdruckgeber 4, an den eine z. B. der Vorderachse zugeordnete hydraulische Radbremse 7 angeschlossen ist, und andererseits mit einem ersten Druckraum 41 eines vorzugsweise zweikreisig ausgeführten dritten Bremsdruckgebers 6 in Verbindung, an den eine der anderen Fahrzeugachse, vorzugsweise der nicht angetriebenen Hinterachse, zugeordnete Radbremse 9 angeschlossen ist. Das Absperren der Leitung erfolgt mittels eines ersten Elektromagnetventils 13a, während in dem zum dritten Bremsdruckgeber 6 führenden Leitungsabschnitt ein zweites Elektromagnetventil 15a eingefügt ist. Der zweite Druckraum (Sekundärdruckraum) 19 steht über eine absperrbare zweite hydraulische Leitung 12 einerseits mit einem zweiten elektrisch ansteuerbaren Bremsdruckgeber 5, an den die andere, der Vorderachse zugeordnete hydraulische Radbremse 8 angeschlossen ist, und andererseits mit einem zweiten Druckraum 42 des dritten Bremsdruckgebers 6 in Verbindung, an den die andere, der Hinterachse zugeordnete Radbremse 10 angeschlossen ist. Das Absperren der Leitung 12 erfolgt mittels eines dritten Elektromagnetventils 13b, während in den zum dritten Bremsdruckgeber 6 führenden Leitungsabschnitt ein viertes Elektromagnetventil 15b eingefügt ist.

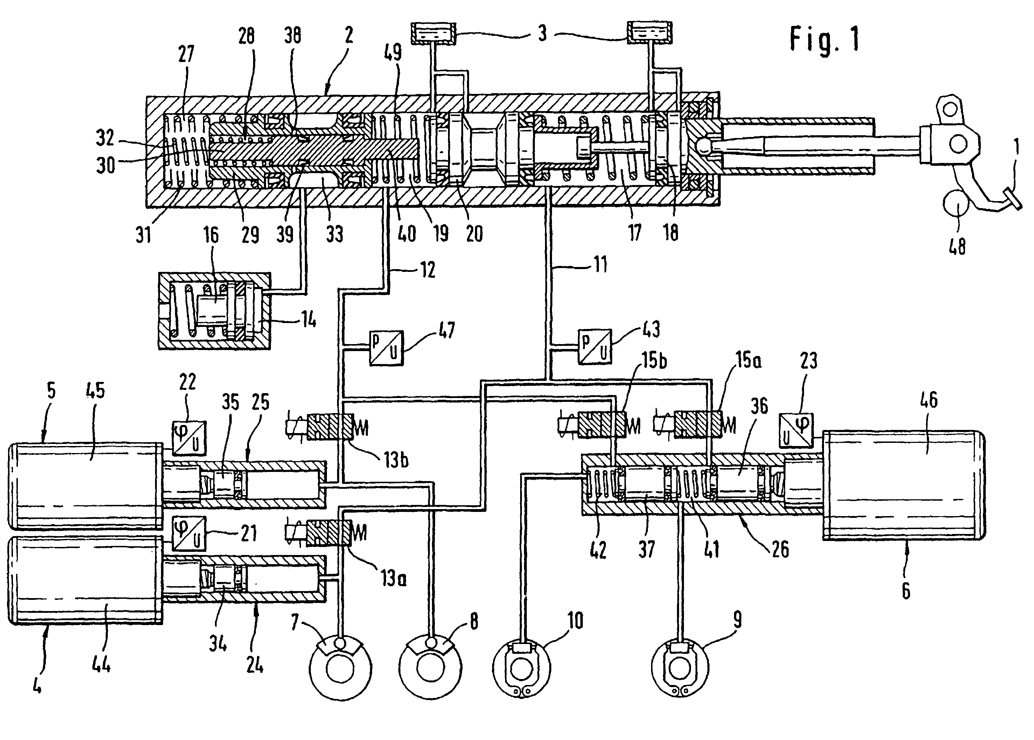

Wie der Fig. 1 weiter zu entnehmen ist, wird der zweite (Sekundär-) Druckraum 19 des Hauptbremszylinders 2 von einem dritten Druckraum 27 durch einen dritten Kolben 28 getrennt, der gleichzeitig einen Ringraum 33 begrenzt. An den Ringraum 33, der mit dem dritten Druckraum 27 in Verbindung steht, ist eine von einem federnd vorgespannten hydraulischen Kolben 16 begrenzte Simulatorkammer 14 angeschlossen. Der dritte Kolben 28 ist dabei vorzugsweise zweiteilig ausgeführt und besteht aus einem Außenkolben 29 sowie einem im Außenkolben 29 abgedichtet geführten Innenkolben 30, der entgegen der Betätigungsrichtung des Hauptbremszylinders 2 mittels einer Druckfeder 32 vorgespannt ist und am Außenkolben 29 axial anliegt, so daß er von dem letzteren mitgenommen werden kann. Der mittels einer zweiten Druckfeder 31 vorgespannte Außenkolben 29 weist mehrere, an seinem Umfang gleichmäßig verteilt ausgebildete radiale Bohrungen 38 auf, die im Ringraum 33 münden und die die vorhin erwähnte Verbindung zwischen diesem und dem dritten Druckraum 27 ermöglichen. Die Bohrungen 38 können bei einer Relativbewegung zwischen den beiden Kolbenteilen 29,30 von einer auf dem Innenkolben 30 angeordneten Dichtmanschette 39 überfahren werden, so daß die Verbindung unterbrochen wird. Die Relativbewegung zwischen dem Innen- 30 und dem Außenkolben 29 kann durch axiales Anliegen des zweiten Hauptzylinderkolbens 20 an einer axialen Verlängerung 40 des Innenkolbens 30 bzw. durch eine Kraftübertragung zwischen den beiden Teilen, insbesondere bei einem Ausfall des Sekundärraumes 19, bzw. der Ventile 13,15 oder wenn die Ventile 13,15 nicht geschaltet wurden, eingeleitet werden.

Alle drei Bremsdruckgeber 4,5,6 sind von ihrem Aufbau her im Prinzip gleich und bestehen aus je einem Hydraulikzylinder 24,25,26, in dem je ein Kolben 34,35,36 + 37 verschiebbar geführt ist, der durch je einen vorzugsweise reversierbaren Gleichstrommotor 44,45,46 antreibbar ist. Der gemeinsamen Ansteuerung der Gleichstrommotoren 44,45,46 sowie der Elektromagnetventile 13a,b, 15a,b dient eine nicht gezeigte elektronische Steuereinheit, der als Eingangssignale die Ausgangssignale eines mit dem Betätigungspedal 1 zusammenwirkenden Bremslichtschalters 48, sowie zweier Drucksensoren 43,47 zugeführt werden, die an die Druckräume 17,19 des Tandemhauptzylinders 2 angeschlossen sind und die eine Fahrerverzögerungswunscherkennung ermöglichen. Dabei ist es besonders vorteilhaft, wenn die Drucksensoren 43,47 als Bestandteile der hydraulischen Steuereinheit ausgebildet sind. Zur Fahrerverzögerungswunscherkennung können jedoch auch andere Mittel, beispielsweise ein die Betätigungskraft am Betätigungspedal 1 sensierender Kraftsensor verwendet werden. Als weitere Eingangssignale können der Steuerelektronik Informationen über den Betätigungsweg der Bremsdruckgeberkolben 34,35,36 zugeführt werden, die von lediglich schematisch angedeuteten Weg- bzw. Lagesensoren 21,22,23 zur Verfügung gestellt werden. Außerdem sind den einzelnen, nicht gezeigten Rädern in Fig. 1 nicht dargestellte Radsensoren zugeordnet, deren der Fahrgeschwindigkeit entsprechende Ausgangssignale als weitere Eingangsgrößen der elektronischen Steuereinheit zugeführt werden.

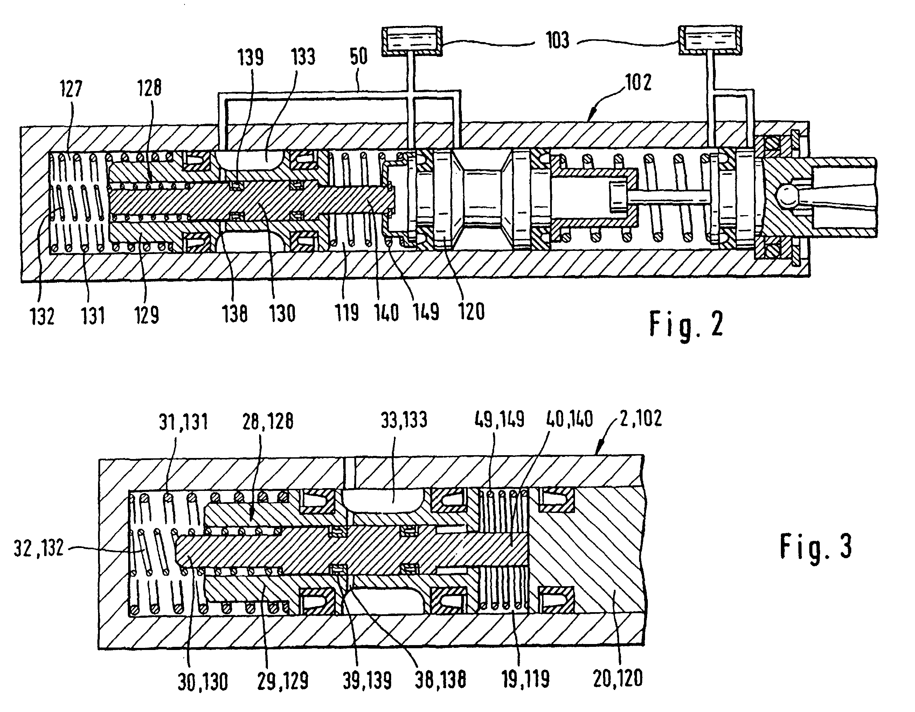

Bei der in Fig. 2 dargestellten Ausführung des Erfindungsgegenstandes, bei der sämtliche, der Fig. 1 entsprechenden Teile mit den gleichen, um 100 erhöhten Bezugszeichen versehen sind, wird die Funktion der im Zusammenhang mit Fig. 1 erwähnten Simulatorkammer 14 von dem dritten Druckraum 127 übernommen, wobei eine hydraulische Verbindung 50 zwischen dem Ringraum 133 und dem Druckmittelvorratsbehälter 103 vorgesehen ist.

Die Funktionsweise des in der Zeichnung gezeigten Bremsbetätigungssystems ist ausführlich in der eingangs genannten älteren Patentanmeldung P 4413579 beschrieben. Bei der Betätigung des Hauptbremszylinders 2 bzw. 102 (Fig. 2), bei der die stromlos offenen (S0-) Elektromagnetventile 13a, b, 15a,b geschlossen werden, verschiebt der im zweiten Druckraum 19 bzw. 119 entstehende Druck den dritten Kolben 28 bzw. 128, wobei der Innenkolben 30, 130 vom Außenkolben 29,129 mitgenommen wird, so daß keine Relativbewegung zwischen den beiden Kolben 29,30 bzw. 129,130 stattfindet und die Verbindung zwischen dem dritten Druckraum 27,127 und dem Ringraum 33,133 offenbleibt, so daß ein Druckmittelvolumen aus dem dritten Raum 27 bzw. 127 in die Simulatorkammer 14 bzw. den drucklosen Druckmittelvorratsbehälter 103 (Fig. 2) einströmt und dem Fahrer das Gefühl vermittelt wird, daß das Druckmittelvolumen aus dem Tandemhauptzylinder 2 in die Radbremsen 7 - 10 gelangt. Das Befüllen der Radbremsen 7 - 10 wird jedoch in bekannter Weise von den Druckgebern 4,5 und 6 übernommen. Für die Kräfte $F_1$, $F_2$, der den Außen- 29,129 bzw. den Innenkolben 30,130 vorspannenden Druckfedern 31,131 und 32,132 gelten dabei die folgenden Beziehungen:

$$F_1 < p_{SK} \times A_{AK}$$

$$F_2 > p_{SK} \times A_{IK},$$

wobei mit

$p_{SK}$ - der im zweiten Druckraum 19,119 herrschende hydraulische Druck,

$A_{AK}$ - die Fläche des Außenkolbens 29,129 und

$A_{IK}$ - die Fläche des Innenkolbens 30,130 bezeichnet sind.

Fig. 3 zeigt schließlich den Endbereich des Hauptbremszylinders 2,102 in einem Fehlerfall, beispielsweise bei einem Ausfall der Elektronik, bei dem die Elektromagnetventile 13a,b, 15a,b offenbleiben. In einem solchen Fall kann das Druckmittelvolumen aus dem zweiten Druckraum 19,119 zu den Radbremsen 8,10 strömen, wobei der zweite Hauptzylinderkolben 20,120 einen Weg zurücklegt, auf dem er den Innenkolben 30 bzw. 130 mechanisch verschiebt, während der Außenkolben 29,129 stehenbleibt. Dadurch werden die im Außenkolben 29,129 vorgesehenen Bohrungen 38,138 von den Dichtmanschetten 39,139 überfahren, so daß die Verbindung zwischen dem dritten Druckraum 27 bzw. 127 und der Simulatorkammer 14 bzw. dem Druckmittelvorratsbehälter 103 abgesperrt wird und aus dem dritten Druckraum 27,127 kein Druckmittelvolumen hinausgeschoben werden kann. Da in diesem Fall kein Druckmittelvolumenverlust entsteht, so steht das gesamte Druckmittelvolumen des Hauptbremszylinders 2,102 den Radbremsen 7 - 10 zur Verfügung.

Die vorhin erwähnte Druckfeder 31,131 muß dabei so ausgelegt werden, daß die folgende Bedingung erfüllt ist:

$$F_1 > F_{FSK} + c_{FSK} \times \Delta s_{SK} + p_R \times A_{AK},$$

wobei mit

$F_{FSK}$ - die Kraft einer zwischen dem zweiten (20,120) und dem dritten Kolben 28,128 wirkenden Druckfeder 49,149,

$c_{FSK}$ - die Federrate der Druckfeder 49,149,

$\Delta s_{SK}$ - der in einem Fehlerfall bei Zusammendrücken der Druckfeder 49,149 vom zweiten Hauptzylinderkolben 20,120 zurückgelegte Weg,

$p_R$ - der in den Radbremsen 8,10 bei offenen Elektromagnetventilen 13b, 15b herrschende Druck und

$A_{AK}$ - die Fläche des Außenkolbens 29,129

bezeichnet sind.

Bezugszeichenliste

| | |
|---|---|
| 1 | Betätigungspedal |
| 2 | Hauptbremszylinder |
| 3 | Druckmittelvorratsbehälter |
| 4 | Bremsdruckgeber |
| 5 | Bremsdruckgeber |
| 6 | Bremsdruckgeber |
| 7 | Radbremse |
| 8 | Radbremse |
| 9 | Radbremse |
| 10 | Radbremse |
| 11 | Leitung |
| 12 | Leitung |
| 13a,b | Elektromagnetventil |
| 14 | Simulatorkammer |
| 15a,b | Elektromagnet |
| 16 | Kolben |
| 17 | Druckraum |
| 18 | Kolben |
| 19 | Druckraum |
| 20 | Kolben |
| 21 | Weg- bzw. Lagesensor |
| 22 | Weg- bzw. Lagesensor |
| 23 | Weg- bzw. Lagesensor |
| 24 | Hydraulikzylinder |
| 25 | Hydraulikzylinder |
| 26 | Hydraulikzylinder |
| 27 | Druckraum |
| 28 | Kolben |
| 29 | Außenkolben |
| 30 | Innenkolben |
| 31 | Druckfeder |
| 32 | Druckfeder |
| 33 | Ringraum |
| 34 | Kolben |
| 35 | Kolben |
| 36 | Kolben |
| 37 | Kolben |
| 38 | Bohrung |
| 39 | Dichtmanschette |
| 40 | Verlängerung |
| 41 | Druckraum |
| 42 | Druckraum |
| 43 | Drucksensor |
| 44 | Gleichstrommotor |
| 45 | Gleichstrommotor |
| 46 | Gleichstrommotor |
| 47 | Drucksensor |
| 48 | Bremslichtschalter |
| 49 | Druckfeder |
| 50 | Verbindung |

**Patentansprüche**

**1.** Elektronisch regelbares Bremsbetätigungssystem für Kraftfahrzeuge mit einem mittels eines Betätigungspedals (1) betätigbaren, mindestens einen Kolben (18,20) aufweisenden Hauptbremszylinder (2), mit mindestens einem durch eine elektronische Steuereinheit ansteuerbaren Bremsdruckgeber (4,5,6), an den Radbremsen (7,8,9,10) des Fahrzeuges direkt angeschlossen sind und der über mindestens eine mittels einer Ventileinrichtung absperrbare hydraulische Verbindung (11,12) mit dem Hauptbremszylinder (2) verbindbar ist, mit mindestens einer Sensoreinrichtung zur Erkennung des Fahrerverzögerungswunsches sowie mit einer mit dem Hauptbremszylinder (2) zusammenwirkenden Simulatorkammer (14) **dadurch gekennzeichnet, daß** die Simulatorkammer (14) an einen im Hauptbremszylinder (2) von einem weiteren Kolben (28) begrenzten hydraulischen Raum (27) mittels einer absperrbaren Verbindung (38) hydraulisch angeschlossen ist.

2. Bremsbetätigungssystem nach Anspruch 1 **dadurch gekennzeichnet, daß** die Simulatorkammer (14) an einen im Hauptbremszylinder (2) vom weiteren Kolben (28) begrenzten Ringraum (33) angeschlossen ist, der mit dem hydraulischen Raum (27) absperrbar verbunden ist.

3. Elektronisch regelbares Bremsbetätigungssystem für Kraftfahrzeuge mit einem mittels eines Betätigungspedals betätigbaren, mindestens einen Kolben (120) aufweisenden Hauptbremszylinder (102), dessen Druckraum (119) mit einem Nachlaufbehälter (103) verbindbar ist, mit mindestens einem durch eine elektronische Steuereinheit ansteuerbaren Bremsdruckgeber, an den Radbremsen des Fahrzeuges direkt angeschlossen sind und der über mindestens eine, mittels einer Ventileinrichtung absperrbare hydraulische Verbindung mit dem Hauptbremszylinder verbindbar ist, mit mindestens einer Sensoreinrichtung zur Erkennung des Fahrerverzögerungswunsches sowie mit einer im Hauptbremszylinder (102) getrennt von dessen Druckraum (119) ausgebildeten, von einem weiteren Kolben (128) begrenzten Simulatorkammer (127), die mittels einer absperrbaren Verbindung (138) mit dem Nachlaufbehälter (103) verbunden ist, **dadurch gekennzeichnet, daß** der weitere Kolben (128) zweiteilig ausgebildet ist und aus einem Außenkolben (129) sowie einem Innenkolben (130) besteht, der im Außenkolben (129) geführt und von diesem mitnehmbar angeordnet ist, wobei die absperrbare Verbindung durch mindestens eine im Außenkolben (129) ausgebildete Bohrung (138) gebildet ist, die mit einer am Innenkolben (130) angeordneten Dichtmanschette (139) so zusammenwirkt, daß das Absperren der Verbindung durch eine Relativbewegung des Außen- (129) und des Innenkolbens (130) zueinander erfolgt.

4. Bremsbetätigungssystem nach Anspruch 1 oder 2 **dadurch gekennzeichnet, daß** der weitere Kolben (28) zweiteilig ausgebildet ist und aus einem Außenkolben (29) sowie einem Innenkolben (30) besteht, der im Außenkolben (29) geführt und von diesem mitnehmbar angeordnet ist, wobei die absperrbare Verbindung durch mindestens eine im Außenkolben (29) ausgebildete Bohrung (38) gebildet ist, die mit einer am Innenkolben (30) angeordneten Dichtmanschette (39) so zusammenwirkt, daß das Absperren der Verbindung durch eine Relativbewegung des Außen- (29) und des Innenkolbens (30) zueinander erfolgt.

5. Bremsbetätigungssystem nach Anspruch 3 oder 4 **dadurch gekennzeichnet, daß** der Innenkolben (30,130) eine axiale Verlängerung (40,140) aufweist, die mit dem Hauptzylinderkolben (20,120) in kraftübertragenden Eingriff bringbar ist.

**Claims**

1. Electronically controllable brake actuating system for automotive vehicles which includes a master brake cylinder (2) operable by an actuating pedal (1) and having at least one piston (18, 20), at least one braking pressure generator (4,5,6) actuatable by an electronic control unit, to which braking pressure generator wheel brakes (7,8,9,10) of the vehicle are directly connected and which is connectable to the master brake cylinder (2) by at least one hydraulic connection (11, 12) closable by a valve assembly, at least one sensor device to identify the driver's wish for deceleration, and a simulator chamber (14) which interacts with the master brake cylinder (2),
**characterized in that** the simulator chamber (14) is hydraulically connected to a hydraulic chamber (27) by way of a closable connection (38), said hydraulic chamber being bounded in the master brake cylinder (2) by a second piston (28).

2. Brake actuating system as claimed in claim 1, **characterized in that** the simulator chamber (14) is connected to an annular chamber (33) which is confined in the master brake cylinder (2) by the second piston (28), and the annular chamber is connected to the hydraulic chamber (27) in a closable way.

3. Electronically controllable brake actuating system for automotive vehicles which includes a master brake cylinder (102) operable by an actuating pedal and having at least one piston (120), the pressure chamber (119) of the master brake cylinder being connectable to a supply reservoir (103), at least one braking pressure generator actuatable by an electronic control unit, to which braking pressure generator wheel brakes of the vehicle are directly connected and which is connectable to the master brake cylinder by at least one hydraulic connection closable by a valve assembly, at least one sensor device to identify the driver's wish for deceleration, and a simulator chamber (127) which is provided in the master brake cylinder (102) separated from said's pressure chamber (119) and limited by a second piston (128), the simulator chamber being connected to the supply reservoir (103) by a closable connection (138),

**characterized in that** the second piston (128) has a bipartite design and includes an external piston (129) and an internal piston (130) which is guided in the external piston (129) and so arranged as to be entrained by the latter piston, wherein the closable connection is provided by at least one bore (138) in the external piston (129) which interacts with a sealing sleeve (139) arranged on the internal piston (130) so that the connection is closed by a movement of the external piston (129) and the internal piston (130) relative to each other.

4. Brake actuating system as claimed in claim 1 or claim 2,

**characterized in that** the second piston (28) has a bipartite design and includes an external piston (29) and an internal piston (30) which is guided in the external piston (29) and so arranged as to be entrained by the latter piston, wherein the closable connection is provided by at least one bore (38) in the external piston (29) which interacts with a sealing sleeve (39) arranged on the internal piston (30) so that the connection is closed by a movement of the external piston (29) and the internal piston (30) relative to each other.

5. Brake actuating system as claimed in claim 3 or claim 4,

**characterized in that** the internal piston (30, 130) has an axial extension (40, 140) which is movable into force-transmitting engagement with the master cylinder piston (20, 120).

### Revendications

1. Système d'actionnement de frein à régulation électronique pour véhicule automobile comportant un cylindre principal de frein (2) avec au moins un piston (18, 20) qui peut être actionné au moyen d'une pédale d'actionnement (1), comportant au moins un transducteur de pression de freinage (4, 5, 6) qui peut être commandé au moyen d'une unité de commande électronique et auquel sont raccordés directement des freins de roue (7, 8, 9, 10) du véhicule, et qui peut être relié au cylindre principal de frein (2) par une liaison hydraulique (11, 12) qui peut être fermée au moyen d'un dispositif à soupape, comportant au moins un dispositif de détection pour reconnaître la volonté de ralentir du conducteur ainsi qu'une chambre de simulateur (14) qui coopère avec le cylindre principal de frein (2), **caractérisé en ce que** la chambre de simulateur (14) est raccordée hydrauliquement, au moyen d'une liaison (38) qui peut être fermée; à une chambre hydraulique (27) limitée, dans le cylindre de frein principal (2), par un autre piston (28).

2. Système d'actionnement de frein selon la revendication 1, **caractérisé en ce que** la chambre de simulateur (14) est raccordée à une chambre annulaire (33) qui, dans le cylindre principal de frein (2), est limitée par l'autre piston (28) et est reliée, de manière à pouvoir être fermée, à la chambre hydraulique (27).

3. Système d'actionnement de frein à régulation électronique pour véhicule automobile, comportant un cylindre principal de frein (102) avec au moins un piston (120) qui peut être actionné au moyen d'une pédale d'actionnement et dont la chambre sous pression (119) peut être reliée à un récipient de retour (103), comportant au moins un transducteur de pression de freinage qui peut être commandé au moyen d'une unité de commande électronique et auquel sont raccordés directement des freins des roues du véhicule, et qui peut être relié au cylindre principal de frein par au moins une liaison hydraulique qui peut être fermée au moyen d'un dispositif à soupape, comportant au moins un dispositif de détection pour reconnaître la volonté de freiner du conducteur ainsi qu'une chambre de simulateur (127) limitée par un autre piston (128) et réalisée dans le cylindre principal de frein (102) séparément de sa chambre sous pression (119), laquelle chambre de simulateur est reliée au récipient de retour (103), au moyen d'une liaison (138) qui peut être fermée, **caractérisé en ce que** l'autre piston (128) est réalisé en deux parties et est constitué d'un piston extérieur (129) ainsi que d'un piston intérieur (130) qui est guidé dans le piston extérieur (129) et qui est disposé de manière à pouvoir être entraîné par celui-ci, la liaison qui peut être fermée étant formée par au moins un alésage (138) qui est réalisé dans le piston extérieur (129) et qui coopère avec un manchon d'étanchéité (139) disposé sur le piston intérieur (130) de manière que la fermeture de la liaison s'effectue par un mouvement relatif du piston extérieur (129) et du piston intérieur (130) l'un par rapport à l'autre.

4. Système d'actionnement de frein selon la revendication 1 ou 2, **caractérisé en ce que** l'autre piston (28) est réalisé en deux parties et est constitué d'un piston extérieur (29) ainsi que d'un piston intérieur (30) qui est guidé dans le piston extérieur et est disposé de manière à pouvoir être entraîné par celui-ci, la liaison qui peut être fermée étant formée par au moins un alésage (38) qui est réalisé dans le piston extérieur (29) et qui coopère avec un manchon d'étanchéité (39) disposé sur le piston intérieur (30) de manière que la fermeture de la liaison s'effectue par un mouvement relatif du piston extérieur (29) et du piston intérieur (30) l'un par rapport à l'autre.

**5.** Système d'actionnement de frein selon la revendication 3 ou 4, **caractérisé en ce que** le piston intérieur (30, 130) comporte un prolongement axial (40, 140) qui peut être amené en engagement avec le piston du cylindre principal (20, 120) de manière à transmettre des forces.

Fig. 1

Fig. 2

Fig. 3